Europäisches Patentamt

European Patent Office

Office européen des brevets

(19)

(11) Veröffentlichungsnummer : **0 176 790**
**B1**

(12) **EUROPÄISCHE PATENTSCHRIFT**

(45) Veröffentlichungstag der Patentschrift :
25.05.88

(21) Anmeldenummer : 85111111.2

(22) Anmeldetag : 03.09.85

(51) Int. Cl.⁴ : **E 05 F 11/36**

(54) Betätigungsgetriebe für einen Fenster- oder Türladen.

(30) Priorität : 01.10.84 AT 3097/84

(43) Veröffentlichungstag der Anmeldung :
09.04.86 Patentblatt 86/15

(45) Bekanntmachung des Hinweises auf die Patenterteilung : 25.05.88 Patentblatt 88/21

(84) Benannte Vertragsstaaten :
AT CH DE IT LI

(56) Entgegenhaltungen :
DE-A- 3 227 904
FR-A- 2 467 954
FR-E-    40 204
LU-A-    81 930
NL-A-    278 783
US-A- 3 174 354

(73) Patentinhaber : **Mayer & Co. Riegel- und Beschlägefabrik**
**Alpenstrasse 173**
**A-5021 Salzburg (AT)**

(72) Erfinder : **Mayer, Ernst, Dipl.-Ing.**
**Kreuzbergpromenade 24A**
**D-5026 Salzburg-Aigen (DE)**

(74) Vertreter : **Dipl.-Phys.Dr. Manitz Dipl.-Ing., Dipl.-Wirtsch. Finsterwald Dipl.-Chem.Dr. Heyn Dipl.-Phys. Rotermund Morgan, B.Sc.(Phys.)**
**Robert-Koch-Strasse 1**
**D-8000 München 22 (DE)**

EP 0 176 790 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Betätigungsgetriebe für einen Fenster- oder Türladen nach dem Oberbegriff des Anspruchs 1.

Bei einem bekannten Betätigungsgetriebe dieser Art (FR-A-2 467 954) besteht das Gehäuse aus zwei symmetrischen Halbschalen, in denen eine Schnecke sowie ein mit dieser in Wirkverbindung stehendes und als Stirnrad ausgebildetes Schneckenrad gelagert ist. Ein Ende der über das Gehäuse hinausstehenden Drehachse des Schneckenrads dient als Aufnahmezapfen für eine Hülse eines Fenster- oder Türbandes und ist mit einem Schlitz versehen, in den ein mit der Hülse formschlüssig verbundener Stift ragt und so das Fenster- oder Türband drehfest mit der Drehachse des Schneckenrads verbindet. Die Schnecke ist mittels eines axialen Ansatzstückes und über eine Verlängerung drehfest mit einer von einem Innenraum aus betätigbaren Handkurbel verbunden.

Da das Betätigungsgetriebe nur ein Drehlager für den Laden bildet, wird dieser in bekannter Weise durch wenigstens ein weiteres Drehlager abgestützt, das am Stock angebracht ist. Dieses Drehlager wird im allgemeinen durch einen von einem Kloben getragenen Bandzapfen gebildet, auf dem die Hülse eines Ladenbandes aufgesteckt ist. Dabei erweist es sich als nachteilig, daß dieser Kloben eine Kröpfung im Bereich des zapfenseitigen Endes aufweisen muß, um ein Fluchten des Bandzapfens mit der in einem seitlichen Abstand zum Stock befindlichen Drehachse des Schneckenrades sicherzustellen. Es können daher keine üblichen Kloben Verwendung finden. Da der Abstand zwischen der Achse der Schneckenwelle und der Achse des Schneckenrades durch den Schneckenradius und den Radius des Schneckenrades bestimmt wird, ergibt sich eine breite Bauweise des Betätigungsgetriebes sowie ein großes Biegemoment um die Achse des rohrförmigen Ansatzstückes des Gehäuses. Das Gehäuse muß deshalb entsprechend stabil ausgebildet werden, um die durch das Biegemoment auftretenden Kräfte verformungsfrei aufnehmen zu können.

Der Erfindung liegt die Aufgabe zugrunde, ein Betätigungsgetriebe für einen Fenster- oder Türladen zu schaffen, bei dem ungekröpfte Kloben für die zusätzlichen Drehlager der Laden verwendet werden können. Außerdem soll bei einem einfachen Getriebeaufbau eine vorteilhafte Getriebebelastung sichergestellt werden, wobei die Möglichkeit einer einfachen Umstellung zwischen einem Rechts- und Linksanschlag besteht.

Diese Aufgabe wird dadurch gelöst, daß das Schneckenrad als Planrad mit einer Verzahnung ausgebildet ist, deren Wälzfläche in einer zur Radachse senkrechten Ebene liegt, und daß der Außendurchmesser des das rohrförmige Ansatzstück aufweisenden Gehäuses lediglich durch den Außendurchmesser des Schneckenrades bestimmt ist.

Da das Schneckenrad nicht als Stirnrad, sondern als Planrad ausgebildet ist, bei dem die Verzahnung eine ebene, zur Achse des Schneckenrades senkrechte Wälzfläche aufweist, kann der Abstand zwischen den Achsen des Schneckenrades und der Schnecke auf die Summe des Schneckenradius und des Radius der Nabe des Schneckenrades verkleinert werden, so daß für die übrigen Drehlager ungekröpfte Kloben verwendet werden können. Die Bandhülsen, die durch eine Einrollung des Ladenbandes entstehen, sind ja von vorne herein um ein entsprechendes Maß gegenüber dem abgewinkelten Bandteil seitlich versetzt. Wegen des kürzeren Abstands zwischen den Achsen der Schnecke und des Schneckenrads ergibt sich außerdem ein Gehäuse, dessen Baugröße reduziert und das wegen des geringeren Biegemomentes in einer einfacheren und leichteren Art ausgeführt kann.

Besonders vorteilhafte Konstruktionsverhältnisse ergeben sich, wenn das Schneckenrad in weiterer Ausbildung der Erfindung aus zwei koaxialen Teilen besteht, die an den einander zugekehrten Stirnflächen je eine Planverzahnung aufweisen und die Schnecke zwischen sich aufnehmen. Wegen des Schneckeneingriffes in zwei einander gegenüberliegenden Planverzahnungen können hohe Stellkräfte auf das Schneckenrad übertragen werden, ohne vorzeitige Verschleißerscheinungen befürchten zu müssen. Die geringeren Materialbeanspruchungen erlauben daher auch eine kleinere Bauweise. Da die Schnecke zwischen den beiden Teilen des Schneckenrades angeordnet ist, ergibt sich bei einer solchen Teilung des Schneckenrades senkrecht zur Schneckenradachse eine einfache Gehäuseform, weil das Gehäuse lediglich das Schneckenrad und die aus dem geteilten Schneckenrad vorragenden Teile der Schneckenwelle aufnehmen muß.

Um in einfacher Weise eine drehfeste Verbindung zwischen dem Bandzapfen und dem Schneckenrad sicherzustellen, kann der Bandzapfen als in die Nabe des Schneckenrades formschlüssig eingreifende Mehrkantwelle ausgebildet werden. Die durch den Formschluß erhaltene, drehfeste Verbindung zwischen dem Bandzapfen und dem Schneckenrad erlaubt es außerdem, die beiden Teile des Schneckenrades mit Hilfe des Bandzapfens drehfest miteinander zu verbinden, so daß sich besondere Maßnahmen zur drehfesten Verbindung der beiden Schneckenradteile erübrigen.

Die Ausbildung des Bandzapfens als eine formschlüssig in die Nabe des Schneckenrades eingreifende Mehrkantwelle ermöglicht darüber hinaus eine einfache Umstellung des Betätigungsgetriebes zwischen einem Links- und Rechtsanschlag. Der Bandzapfen braucht zu diesem Zweck lediglich wahlweise von einer der beiden Stirnseiten in die Nabe des Schneckenrades anschlagbegrenzt eingesteckt zu werden. Dieses Einstecken des Bandzapfens in die Nabe des Schneckenrades von den beiden Stirnseiten her erfordert allerdings einen losen Bandzapfen. Soll ein solcher loser Bauteil vermieden werden, so kann der Bandzapfen zwischen zwei Raststellungen verschiebbar in der Nabe des Schneckenrades gelagert werden. Damit ist der Bandzapfen gegen ein Herausziehen aus der Nabe des Schneckenrades gesichert, ohne die Umstellung des Betätigungsgetriebes zu gefährden, weil der Bandzapfen ja nach beiden Seiten in die jeweilige Raststellung aus der Nabe vorgeschoben werden kann.

Für das Verrasten des Bandzpafens in einer der beiden Raststellungen kann vorteilhaft eine federnde Rasteinrichtung vorgesehen sein, die den Bandzapfen beim Erreichen einer der beiden Raststellungen selbständig festhält. Obwohl sehr unterschiedliche Rasteinrichtungen möglich sind, so wäre beispielsweise eine Kugelrast durchaus sinnvoll, ergeben sich besonders einfache Konstruktionsverhältnisse, wenn die federnde Rasteinrichtung aus einer mit zwei Rastnuten des Bandzapfens zusammenwirkenden, $\Omega$-förmigen Rastfeder besteht, die den Bandzapfen umschließt und in Aussparungen zwischen den beiden Teilen des Schneckenrades eingesetzt ist. Diese $\Omega$-förmige Rastfeder gleitet beim Verschieben des Bandzapfens in der Nabe des Schneckenrades entlang des Bandzapfens, um beim Erreichen einer der beiden Rastnuten in diese einzugreifen und den Bandzapfen gegenüber der Nabe festzuhalten. Je nach der Ausbildung der Flanken der Rastnuten kann die Rast nach dem Eingriff der Rastfeder in die Rastnut wieder überwunden werden oder nicht.

Um bei der Vormontage des Betätigungsgetriebes nicht eine Einstellung für einen Links- oder Rechtsanschlag vornehmen zu müssen, kann zwischen den beiden Raststellungen zusätzlich eine mittlere Raststellung für den Bandzapfen vorgesehen sein, so daß die Einstellung für den Links- oder Rechtsanschlag erst beim Befestigen des Getriebes am Fenster- bzw. Türstock durchgeführt wird. Diese mittlere Raststellung erlaubt es, die Rasteinrichtung so auszubilden, daß der Bandzpafen in der gewählten endseitigen Raststellung unverschiebbar festgehalten wird. Ein solcher unverschiebbar festgehaltener Bandzapfen kann auch bei nach oben offener Bandhülse nicht in die andere Raststellung durchgeschlagen werden, um den Laden mißbräuchlich von dem Getriebe zu lösen.

In der Zeichnung ist der Erfindungsgegenstand beispielsweise dargestellt. Es zeigen

Fig. 1 ein erfindungsgemaßes Betätigungsgetriebe in einem Axialschnitt,

Fig. 2 dieses Betätigungsgetriebe im Schnitt nach der Linie II-II der Fig. 1,

Fig. 3 eine der Fig. 1 entsprechende Darstellung einer Konstruktionsvariante und

Fig. 4 den einen Teil des Schneckenrades nach Fig. 3 in einer Draufsicht auf die Stirnseite mit der Planverzahnung.

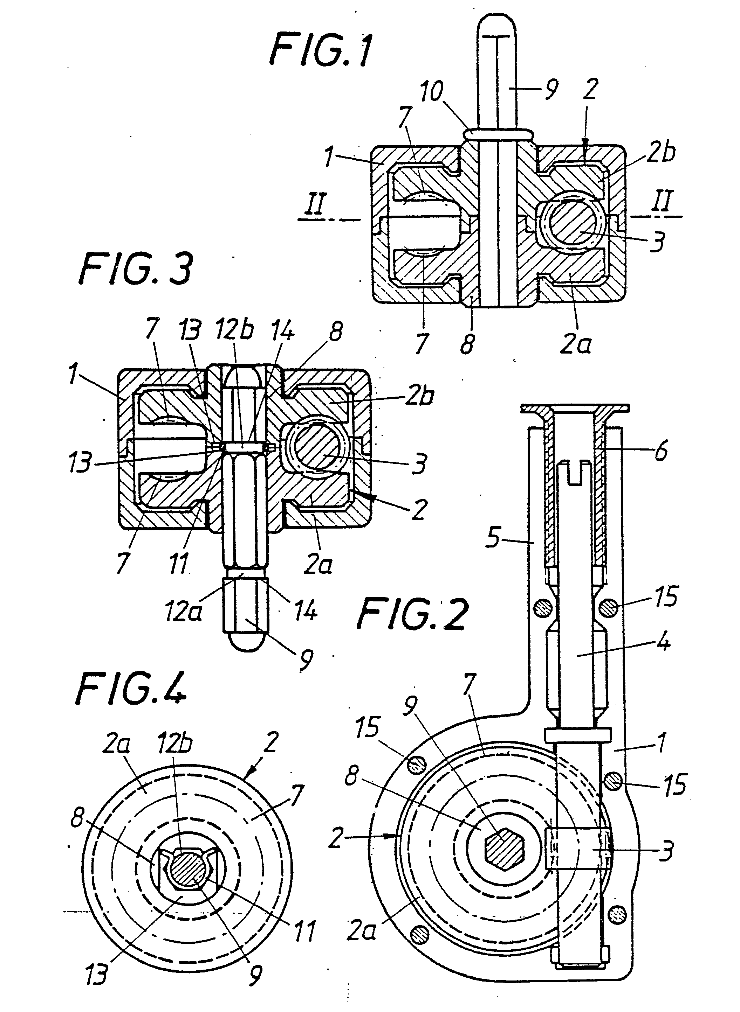

Wie insbesondere die Fig. 1 und 2 erkennen lassen, besteht das Betätigungsgetriebe im wesentlichen aus einem zweiteiligen Gehäuse 1, dessen Teilungsebene in der Schnittfläche der Fig. 2 liegt und aus einem in diesem Gehäuse 1 gelagerten Schneckenrad 2, das mit einer Schnecke 3 kämmt. Diese Schnecke 3 wird über eine Welle 4 angetrieben, die in einem rohrförmigen Ansatz 5 des Gehäuses 1 gelagert ist und mit dem rohrförmigen Ansatz 4 den Stock eines Fensters oder einer Tür durchsetzt. Zur Befestigung des Gehäuses 5 in einer Stockbohrung dient eine in den rohrförmigen Ansatz 5 einschraubbare Kiemmhülse 6, durch die hindurch die Schnekkenwelle 4 mit einer Handkurbel betätigt werden kann.

Zum Unterschied zu üblichen Schneckengetrieben ist das Schneckenrad 2 nicht als Stirnrad, sondern als Planrad ausgebildet, dessen Verzahnung 7 eine Wälzfläche bildet, die in einer zur Schneckenradachse senkrechten Ebene liegt. Demgemäß ist die Verzahnung 7 nicht im Umfangsbereich des Schneckenrades 2, sondern an achsnormalen Stirnflächen vorgesehen. Die Anordnung ist dabei so getroffen, daß das Schneckenrad 2 aus zwei koaxialen Teilen 2a und 2b zusammengesetzt ist, die an ihren einander zugekehrten Stirnflächen je eine Planverzahnung 7 aufweisen, und daß die Schnecke 3 zwischen diese beiden Teile 2a und 2b des Schneckenrades 2 ragt und in beide Planverzahnungen 7 eingreift.

Die Nabe 8 des Schneckenrades 2 nimmt in einer Mehrkantausnehmung einen koaxialen Bandzapfen 9 auf, der als Mehrkantwelle ausgebildet ist und gemäß Fig. 1 von den beiden Stirnseiten der Nabe 8 her bis zu einem Anschlag 10 in die Nabe 8 eingesteckt werden kann. Durch dieses Umstecken des Bandzapfens 9, auf den eine gegengleich geformte Bandhülse eines Ladenbandes aufgesteckt werden kann, kann das Betätigungsgetriebe in einfacher Weise für einen Links- oder Rechtsanschlag umgerüstet werden. Diese Umrüstung erfolgt nach den Fig. 3 und 4 durch ein axiales Verschieben des Bandzapfens 9 zwischen zwei Raststellungen, in denen der Bandzapfen 9 nach der einen oder anderen Stirnseite über die Nabe 8 des Schneckenrades 2 vorragt. Diese Raststellungen werden durch eine Rasteinrichtung bestimmt, die gemäß dem Ausführungsbeispiel aus einer $\Omega$-förmigen Rastfeder 11 besteht, die den Bandzapfen 9 umschließt und mit zwei Rastnuten 12a und 12b des Bandzapfens 9 zusammenwirkt. Diese Rastfeder 11 ist in zwei einander zugekehrten, von der Teilungsfläche der Teile 2a und 2b des Schneckenrades 2 ausgehenden Aussparungen 13 der Nabe 8 eingesetzt und greift beim Verschieben des Bandzapfens 9 in eine der beiden Rastnuten 12a und 12b ein. Da die dem jeweiligen Zapfenende zugekehrten Flanken 14 der Rastnuten 12a und 12b zur Zapfenachse senkrechte Anschlagflächen für die Rastfeder 11 bilden, während die gegenüberliegenden Flanken eine entsprechende Abschrägung aufweisen, kann der Bandzapfen 9 zwar zwischen den beiden durch die Rastnuten 12a und 12b bestimmten Raststellungen hin- und herverschoben, nicht

aber über die Flanken 14 hinaus aus der Nabe 8 herausgezogen werden. Würden beide Flanken der Rastnuten 12a und 12b senkrechte Anschlagflächen für die Rastfeder 11 bilden, so würde die Rastfeder 11 den Bandzapfen 9 nach dem Eingriff in eine der Rastnuten 12a und 12b unverschiebbar festhalten. Eine solche Ausbildung macht eine überwindbare Zwischenrast zwischen den beiden Raststellungen empfehlenswert, um nicht bei der Vormontage die Einstellung auf einen Rechts- oder Linksanschlag vornehmen zu müssen.

Wie der Zeichnung unmittelbar entnommen werden kann, kann durch die Planverzahnung 7 des Schneckenrades 2 der Abstand zwischen den Achsen der Schnecke 3 und des Schneckenrades 2 auf ein Maß verkleinert werden, das nach unten nur durch den Nabenradius des Schneckenrades 2 und den Radius 3 der Schnecke begrenzt wird und wesentlich kleiner als der Radius des Schneckenrades ist. Bei herkömmlichen Schneckengetrieben ist dieser Abstand stets größer als der Radius des Schneckenrades, so daß durch das dargestellte Betätigungsgetriebe alle Nachteile vermieden werden können, die auf einem größeren Abstand zwischen den Achsen des Schneckenrades 2 und der Schnecke 3 beruhen. Die Verbindung des Getriebes mit dem Laden über den Bandzapfen 9, der in eine entsprechende Bandhülse eines am Laden befestigten Ladenbandes eingreift, stellt dabei nicht nur eine einfache Montage sicher, sondern ermöglicht auch eine geringe Bauhöhe, weil das Gehäuse 1 kein aufwendiges Kupplungsstück aufnehmen muß. Der in die Nabe 8 des Schneckenrades 2 eingesetzte Bandzapfen 9 gewährleistet schließlich eine einfache Umstellung des Getriebes auf Links- oder Rechtsanschlag.

Die beiden Gehäuseteile sind gleich ausgebildet und können beispielsweise durch Schrauben oder Nieten 15 zusammengehalten werden, wie dies in Fig. 2 angedeutet ist.

**Patentansprüche**

1. Betätigungsgetriebe für einen Fenster- oder Türladen, bestehend aus einem ein rohrförmiges Ansatzstück (5) aufweisenden, am Fenster- oder Türstock befestigbaren Gehäuse (1), in dem eine mittels einer den Fenster- oder Türstock durchsetzenden Welle (4) antreibbare Schnecke (3) und ein mit der Schnecke (3) in Eingriff stehendes Schneckenrad (2) gelagert sind, dessen Achse koaxial zur Drehachse des Ladens verläuft und das mit einem aus einem koaxialen Bandzapfen (9) für eine drehfest aufsteckbare Bandhülse bestehenden Kupplungsstück für ein Ladenband drehfest verbunden ist, dadurch gekennzeichnet, daß das Schneckenrad (2) als Planrad mit einer Verzahnung (7) ausgebildet ist, deren Wälzfläche in einer zur Radachse senkrechten Ebene liegt, und daß der Außendurchmesser des das rohrförmige Ansatzstück (5) aufweisenden Gehäuses (1) lediglich durch den Außendurchmesser des Schneckenrades (2) bestimmt ist.

2. Betätigungsgetriebe nach Anspruch 1, dadurch gekennzeichnet, daß das Schneckenrad (2) aus zwei koaxialen Teilen (2a, 2b) besteht, die an den einander zugekehrten Stirnflächen je eine Planverzahnung (7) aufweisen und die Schnecke (3) zwischen sich aufnehmen.

3. Betätigungsgetriebe nach Anspruch 1 oder 2, dadurch gekennzeichnet, daß der Bandzapfen (9) als in die Nabe (8) des Schneckenrades (2) formschlüssig eingreifende Mehrkantwelle ausgebildet ist.

4. Betätigungsgetriebe nach den Ansprüchen 2 und 3, dadurch gekennzeichnet, daß die beiden Teile (2a, 2b) des Schneckenrades (2) mit Hilfe des Bandzapfens (9) drehfest verbunden sind.

5. Betätigungsgetriebe nach Anspruch 3 oder 4, dadurch gekennzeichnet, daß der Bandzapfen (9) wahlweise von einer der beiden Stirnseiten in die Nabe (8) des Schneckenrades (2) anschlagbegrenzt einsteckbar ist.

6. Betätigungsgetriebe nach Anspruch 3 oder 4, dadurch gekennzeichnet, daß der Bandzapfen (9) zwischen zwei Raststellungen verschiebbar in der Nabe (8) des Schneckenrades (2) gelagert ist.

7. Betätigungsgetriebe nach Anspruch 6, dadurch gekennzeichnet, daß die beiden Raststellungen durch eine federnde Rasteinrichtung gesichert sind.

8. Betätigungsgetriebe nach den Ansprüchen 2 und 7, dadurch gekennzeichnet, daß die federnde Rasteinrichtung aus einer mit zwei Rastnuten (12a, 12b) des Bandzapfens (9) zusammenwirkenden, Ω-förmigen Rastfeder (11) besteht, die den Bandzapfen (9) umschließt und in Aussparungen (13) zwischen den beiden Teilen (2a, 2b) des Schneckenrades (2) eingesetzt ist.

9. Betätigungsgetriebe nach Anspruch 7 oder 8, dadurch gekennzeichnet, daß zwischen den beiden Raststellungen zusätzlich eine mittlere Raststellung für den Bandzapfen (9) vorgesehen ist.

**Claims**

1. Actuating gear unit for a window or door shutter comprising a housing (1) securable to a door case or window case and having a tubular projection (5), wherein a worm (3) drivable by means of a shaft (4) which penetrates the window or door case, and a worm wheel (2) which is in engagement with the worm (3), are mounted in the housing, wherein the axis of the worm wheel extends coaxially to the axis of rotation of the shutter, and wherein the worm wheel is rotationally fixedly connected with a coupling piece for a shutter hinge, with the coupling piece consisting of a coaxial hinge spigot (9) for a hinge sleeve which can be rotationally fixedly plugged onto it, characterized in that the worm wheel (2) is formed as a face gear with toothing (7) of which the rolling surface lies in a plane perpendicular to the wheel axis ; and in that the outer diameter of the housing (1) having a tubular projection (5) is determined solely by the outer diameter of the worm wheel (2).

2. Actuating gear unit in accordance with claim 1, characterized in that the worm wheel (2) consists of two coaxial parts (2a, 2b) which each have gear teeth (7) at their confronting end faces and which accommodate the worm (3) between them.

3. Actuating gear unit in accordance with claim 1 or claim 2, characterized in that the hinge spigot (9) is formed as a polygonal shaft which engages in form fitted manner into the hub (8) of the worm wheel (2).

4. Actuating gear unit in accordance with the claims 2 and 3, characterized in that the two parts (2a, 2b) of the worm wheel (2) are rotationally fixedly connected together with the aid of the hinge spigot (9).

5. Actuating gear unit in accordance with claim 3 or claim 4, characterized In that the hinge spigot (9) can be selectively inserted into the hub (8) of the worm wheel (2) from one or both end faces to a position restricted by an abutment.

6. Actuating gear unit in accordance with claim 3 or claim 4, characterized in that the hinge spigot (9) is displaceably mounted in the hub (8) of the worm wheel (2) and can be displaced between two latched positions.

7. Actuating gear unit in accordance with claim 6, characterized in that the two latch positions are secured by a resilient latching device.

8. Actuating gear unit in accordance with the claims 2 and 7, characterized in that the resilient latching device consists of an $\Omega$-shaped latch spring (11) which cooperates with two latching grooves (12a, 12b) of the hinge spigot (9), with the latch spring (11) surrounding the hinge spigot (9) and being inserted into cut-outs (13) between the two parts (2a, 2b) of the worm wheel (2).

9. Actuating gear unit in accordance with claim 7 or claim 8, characterized in that a central latching position for the hinge spigot (9) is additionally provided between the two latching positions.

## Revendications

1. Mécanisme d'actionnement d'un volet pour fenêtres ou portes, constitué d'un boîtier (1) présentant une extension (5) de forme tubulaire, boîtier qui est fixable au châssis de la fenêtre ou de la porte, et dans lequel sont logées une vis sans fin (3) qui peut être entraînée par un axe (4) qui traverse le châssis de la fenêtre ou de la porte et une roue tangente (2) qui se trouve en prise avec la vis sans fin (3) et dont l'axe s'étend coaxialement par rapport à l'axe de rotation du volet, cette roue tangente étant en liaison sans possibilité de rotation avec un accouplement pour ruban de volet composé d'un bout d'arbre coaxial (9) pour ruban, pour une douille de ruban emboîtable sans possibilité de rotation, caractérisé en ce que la roue tangente (2) est configurée en roue plate, avec une denture (7) dont la surface primitive se trouve dans un plan perpendiculaire à l'axe de la roue et que le diamètre extérieur du boîtier (1) présentant l'extension tubulaire (5) n'est déterminé que par le diamètre extérieur de la roue tangente (2).

2. Mécanisme d'actionnement selon la revendication 1, caractérisé en ce que la roue tangente (2) se compose de deux parties coaxiales (2a, 2b) qui présentent toutes deux une denture plate (7) aux surfaces frontales opposées et qui accueillent la vis sans fin (3) entre eux.

3. Mécanisme d'actionnement selon la revendication 1 ou 2, caractérisé en ce que le bout d'arbre (9) est réalisé sous forme d'arbre prismatique craboté dans le moyeu (8) de la roue tangente (2).

4. Mécanisme d'actionnement selon les revendications 2 et 3, caractérisé en ce que les deux parties (2a, 2b) de la roue tangente (2) sont reliées sans possibilité de rotation à l'aide du bout d'arbre (9).

5. Mécanisme d'actionnement selon la revendication 3 ou 4, caractérisé en ce que le bout d'arbre (9) peut être introduit et arrêté par une butée dans le moyeu (8) de la roue tangente (9) à partir d'une quelconque des deux faces frontales.

6. Mécanisme d'actionnement selon la revendication 3 ou 4, caractérisé en ce que le bout d'arbre (9) est logé dans le moyeu (8) de la roue tangente (9) de façon qu'il puisse se mouvoir entre deux positions d'arrêt.

7. Mécanisme d'actionnement selon la revendication 6, caractérisé en ce que les deux positions d'arrêt sont fixées par un dispositif d'arrêt à ressorts.

8. Mécanisme d'actionnement selon les revendications 2 et 7, caractérisé en ce que le dispositif d'arrêt à ressorts se compose d'un ressort en forme d'oméga (11) qui travaille conjointement avec deux encoches d'arrêt (12a, 12b) du bout d'arbre (9), ce ressort entourant le bout d'arbre (9) et étant engagé dans des découpes (13) pratiquées dans les deux parties (2a, 2b) de la roue tangente (2).

9. Mécanisme d'actionnement selon la revendication 7 ou 8, caractérisé en ce que, entre les deux positions d'arrêt, une position d'arrêt médiane supplémentaire pour le bout d'arbre (9) est prévue.

0 176 790

**FIG.1**

**FIG. 3**

**FIG. 2**

**FIG.4**